# FASCICULE DE BREVET EUROPEEN

(11) **EP 2 590 825 B1**
(45) Date de publication et mention de la délivrance du brevet: **25.03.2015**
(21) Numéro de dépôt: 11732417.8
(22) Date de dépôt: 07.07.2011
(51) Int. Cl.: B60C 1/00, B60C 5/14, C08L 53/00, C08L 23/22

(54) **OBJET PNEUMATIQUE POURVU D'UNE COUCHE ÉTANCHE AUX GAZ À BASE D'UN MÉLANGE D'UN CAOUTCHOUC BUTYL ET D'UN ÉLASTOMÈRE THERMOPLASTIQUE**
AUFBLASBARER ARTIKEL MIT EINER GASUNDURCHLÄSSIGEN SCHICHT AUF BASIS EINER MISCHUNG AUS BUTYLKAUTSCHUK UND EINEM THERMOPLASTISCHEN ELASTOMER
INFLATABLE ARTICLE PROVIDED WITH GAS-IMPERMEABLE LAYER BASED ON A BLEND OF A BUTYL RUBBER AND A THERMOPLASTIC ELASTOMER

(30) Priorité: 09.07.2010 FR 1055593
(43) Date de publication de la demande: 15.05.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: CUSTODERO, Emmanuel, F-63040 CLERMONT-FERRAND Cedex 9 (FR); GREIVELDINGER, Marc, F-63040 CLERMONT-FERRAND Cedex 9 (FR); GUERY, Cyrille, F-63040 CLERMONT-FERRAND Cedex 9 (FR)
(74) Mandataire: Sidhu, Alban
(86) Numéro de dépôt international: PCT/EP2011/061480
(87) Numéro de publication internationale: WO 2012/004332

(56) Documents cités:
- EP-A1- 0 633 152
- EP-A1- 1 145 870
- FR-A1- 2 939 076

## Description

La présente invention est relative aux articles gonflables, ou objets « pneumatiques », c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques. Des pneumatiques connus sont décrits dans FR 2939076 et EP 0633152.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou « gomme intérieure » ("inner liner") étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes de par la nécessaire présence d'une charge renforçante, inconvénient qui pénalise la résistance au roulement des bandages pneumatiques.

Diminuer l'hystérèse de ces couches internes d'étanchéité et donc, in fine, la consommation de carburant des véhicules automobiles, est un objectif général auquel se heurte la technologie actuelle.

Le document WO 2008/145277 des Demanderesses propose un objet pneumatique pourvu d'une couche étanche aux gaz de gonflage, dans lequel la couche étanche comporte une composition élastomère comprenant au moins un élastomère thermoplastique copolymère à blocs polystyrènes et polyisobutylène et une huile polybutène. Néanmoins, cette solution très différente des couches internes utilisées industriellement à ce jour nécessite une revue des moyens de production industriels.

Il reste donc une solution à apporter aux manufacturiers permettant d'obtenir des compositions pour couche étanche au gaz de gonflage qui présentent une étanchéité satisfaisante tout en diminuant la résistance au roulement, par rapport aux couches internes utilisées industriellement, et sans nécessiter de changements majeurs dans les outils actuellement utilisés industriellement pour confectionner les couches d'étanchéité.

L'invention a pour objet un objet pneumatique pourvu d'une couche élastomère étanche aux gaz de gonflage, dont ladite couche élastomère comporte au moins une composition de caoutchouc comportant au moins, à titre d'élastomère non thermoplastique, un caoutchouc butyl, utilisé seul, ou en coupage avec un ou plusieurs autres élastomères (de préférence diéniques) non thermoplastiques, un système de réticulation, optionnellement une charge renforçante à un taux compris dans un domaine de 0 à 120 pce et un élastomère thermoplastique à bloc polyisobutylène, dont le taux est compris dans un domaine de 3 à 80 parties en poids pour cent parties d'élastomère non thermoplastique (pce).

En effet, de manière surprenante, cette couche élastomère étanche possède de bonnes propriétés d'étanchéité et une hystérèse nettement diminuée par rapport à une composition classique de couche interne, de type butyl formulé (i.e. chargé de noir de carbone).

De préférence, l'invention concerne un objet pneumatique tel que défini ci-dessus, dans lequel l'élastomère thermoplastique représente une proportion variant de 5 à 50 pce.

Préférentiellement, l'invention concerne un objet pneumatique tel que défini ci-dessus, dans lequel la composition de caoutchouc comporte un taux d'élastomère thermoplastique à bloc polyisobutylène supérieur ou égal à 10% en pourcentage volumique par rapport au volume total de charge renforçante et d'élastomère thermoplastique à bloc polyisobutylène additionnés, plus préférentiellement, ce taux est supérieur ou égal à 20%, encore plus préférentiellement supérieur ou égal à 25%, plus préférentiellement encore supérieur ou égal à 30%, de manière très préférentielle supérieur ou égal à 40%, et notamment supérieur ou égal à 50%.

De manière préférentielle, l'invention concerne un objet pneumatique tel que défini ci-dessus, dans lequel l'élastomère thermoplastique à bloc polyisobutylène comprend, à au moins l'une des extrémités du bloc polyisobutylène, un bloc thermoplastique dont la température de transition vitreuse est supérieure ou égale à 60 °C ; plus préférentiellement, le bloc thermoplastique de l'élastomère thermoplastique à bloc polyisobutylène est constitué d'au moins un monomère polymérisé choisi dans le groupe des styrène, méthylstyrènes, para-tertio-butylstyrène, chlorostyrènes, bromostyrènes, fluorostyrènes, para-hydroxy-styrène ; plus préférentiellement encore l'élastomère thermoplastique à bloc polyisobutylène est choisi dans le groupe des copolymères dibloc styrène/ isobutylèrie (« SIB ») et des copolymères tribloc styrène/ isobutylène/ styrène (« SIBS »), et de manière très préférentielle, l'élastomère thermoplastique à bloc polyisobutylène est un styrène/ isobutylène/ styrène (« SIBS »).

Alternativement et de préférence également, l'invention concerne un objet pneumatique tel que défini ci-dessus, dans lequel le bloc thermoplastique de l'élastomère thermoplastique à bloc polyisobutylène est constitué d'au moins un monomère polymérisé choisi dans le groupe de l'éthylène, le propylène, l'oxyde d'éthylène, le chlorure de vinyle, l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile, le methacrylate de méthyle, et les dérivés cellulosiques.

Préférentiellement, l'invention concerne un objet pneumatique tel que défini ci-dessus, dans lequel le caoutchouc butyl est un copolymère d'isobutylène et d'isoprène.

Préférentiellement également, l'invention concerne un objet pneumatique tel que défini ci-dessus, dans lequel le caoutchouc butyl est un copolymère bromo-isobutylène-isoprène.

Préférentiellement encore, l'invention concerne un objet pneumatique tel que défini ci-dessus, dans lequel le caoutchouc butyl est un copolymère chloro-isobutylène-isoprène.

De manière préférentielle, l'invention concerne un objet pneumatique tel que défini ci-dessus, dans lequel la couche élastomère étanche comporte en plus une huile d'extension à un taux compris entre 2 pce et 50 pce.

Préférentiellement également, l'invention concerne un objet pneumatique tel que défini ci-dessus dans lequel la charge renforçante est un noir de carbone ; préférentiellement également, la charge renforçante est une charge inorganique telle que de la silice ; ou alors de manière préférentielle également, la charge renforçante est un coupage de noir de carbone et de charge inorganique telle que de la silice.

Préférentiellement, l'invention concerne un objet pneumatique tel que défini ci-dessus, dans lequel ledit objet est en caoutchouc, et plus préférentiellement ledit objet en caoutchouc est un bandage pneumatique.

Egalement de manière préférentielle, l'invention concerne un objet pneumatique tel que défini ci-dessus, dans lequel ledit objet pneumatique est une chambre à air, et plus préférentiellement une chambre à air de bandage pneumatique.

Pour la fabrication d'un objet pneumatique tel que défini précédemment, la composition de caoutchouc de la couche élastomère étanche aux gaz de gonflage est fabriquée selon un procédé comportant au moins une étape de mélangeage du caoutchouc butyl avec l'élastomère thermoplastique à blocs polyisobutylène et éventuellement la charge renforçante, à une température variant de 60 à 180°C, (préférentiellement 80 à 130°C) pendant 3 à 20 minutes, (préférentiellement 5 à 15 minutes).

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

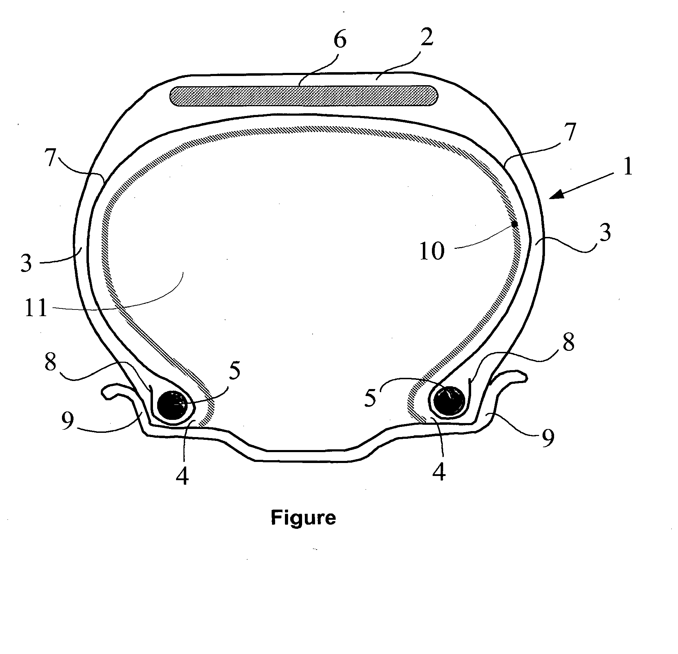

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Dans la présente description, sauf indication expresse différente, tous les pourcentages (%) indiqués sont des % en masse.

Par ailleurs, le terme « pce » signifie au sens de la présente demande de brevet, partie en poids pour cent parties d'élastomère non thermoplastique.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### I-1. Composition élastomère étanche aux gaz

L'objet pneumatique selon l'invention a pour caractéristique essentielle d'être pourvu d'une couche élastomère étanche aux gaz de gonflage, dont ladite couche élastomère comporte au moins une composition de caoutchouc comportant au moins, à titre d'élastomère non thermoplastique, un caoutchouc butyl, utilisé seul, ou en coupage avec un ou plusieurs autres élastomères (de préférence diéniques) non thermoplastiques, un système de réticulation, optionnellement une charge renforçante à un taux compris dans un domaine de 0 à 120 pce et un élastomère thermoplastique à bloc polyisobutylène, dont le taux est compris dans un domaine de 3 à 80 parties en poids pour cent parties d'élastomère non thermoplastique (pce).

### I-1-A. Elastomère ou « caoutchouc » non thermoplastique

De façon usuelle, on utilise indifféremment dans le texte les termes « élastomère » et « caoutchouc » qui sont interchangeables.

La composition de caoutchouc de la couche élastomère étanche selon l'invention, utilisable notamment comme gomme intérieure étanche de pneumatique sans chambre comporte au moins un (c'est-à-dire un ou plusieurs) caoutchouc butyl à titre d'élastomère non thermoplastique, ce caoutchouc butyl pouvant être utilisé seul, ou en coupage avec au moins un (c'est-à-dire un ou plusieurs autres) caoutchouc ou élastomère non thermoplastique, en particulier diénique, autre que butyl.

Par caoutchouc butyl, on entend un homopolymère de poly(isobutylène) ou un copolymère de poly(isobutylène) avec de l'isoprène (dans ce cas ce caoutchouc butyl fait partie des élastomères diéniques), ainsi que les dérivés halogénés, en particulier généralement bromés ou chlorés, de ces homopolymères de poly(isobutylène) et copolymères de poly(isobutylène) et isoprène.

On citera à titre d'exemples de caoutchouc butyl convenant particulièrement à la réalisation de l'invention : les caoutchoucs isobutylène, les copolymères d'isobutylène et d'isoprène (IIR), les caoutchoucs bromo-butyl tels que le copolymère bromoisobutylène-isoprène (BIIR), les caoutchoucs chlorobutyl tels que le copolymère chloroisobutylène-isoprène (CIIR) et les mélanges de ces derniers.

Par extension de la définition précédente, on inclura également sous l'appellation « caoutchouc butyl » des copolymères statistiques d'isobutylène et de dérivés de styrène tels que les copolymères d'isobutylène et méthylstyrène bromé (BIMS) dont fait notamment partie l'élastomère nommé « EXXPRO » commercialisé par la société Exxon.

Tous les caoutchoucs butyl cités ci-dessus sont de manière connue des élastomères diéniques et non thermoplastiques.

Par élastomère ou caoutchouc « diénique », doit être compris de manière connue un (on entend un ou plusieurs) élastomère issu au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha-oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Bien qu'elle s'applique à tout type d'élastomère diénique, l'homme du métier du pneumatique comprendra que pour une utilisation préférentielle en tant que gomme intérieure de pneumatique, la présente invention est de préférence mise en oeuvre avec des élastomères essentiellement saturés, en particulier du type (d) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une température de transition vitreuse, Tg, (mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Enfin par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un mode préférentiel de réalisation de l'invention : l'élastomère majoritaire de la composition conforme à l'invention est le caoutchouc butyl (en particulier pour des applications en tant que gommes intérieures de pneumatique), ce dernier est choisi préférentiellement dans le groupe des élastomères diéniques essentiellement saturés constitué par les copolymères d'isobutène et d'isoprène et leurs dérivés halogénés, cet élastomère essentiellement saturé pouvant être utilisé en coupage avec un élastomère choisi dans le groupe des élastomère diéniques fortement insaturés constitué par les polybutadiènes (en abrégé "BR"), les polyisoprènes (IR) de synthèse, le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

### I-1-B. Charge renforçante

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z-A-Sₓ-A-Z,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 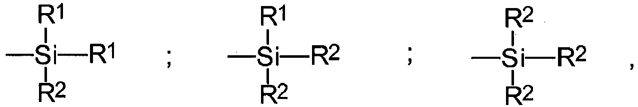 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(allcoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 0 à 120 pce, plus préférentiellement de 0 à 70 pce, plus particulièrement de 5 à 70 pce et plus préférentiellement également de 0 à 50 pce et très préférentiellement de 5 à 50 pce, l'optimum étant bien entendu différent selon les applications particulières visées.

Pour une utilisation de la composition en tant que gomme intérieure de pneumatique, on utilise préférentiellement à titre de charge renforçante du noir de carbone dans une proportion variant de 0 à 120 pce, en effet au-delà de ce taux la pénalisation en terme de rigidité de la composition est trop important pour une application en tant que gomme intérieure de pneumatique. Il est clair que des noirs de carbone de grade ASTM très élevé, tel que le noir de carbone N990, sont moins renforçants que des noirs de carbone de grade 700, et à fortiori 600, et qu'il est nécessaire pour un renforcement identique d'utiliser des taux plus importants de noir de carbone s'il s'agit de noirs de carbone de grade 900 que s'il s'agit de noirs de grade 600 ou 700.

Plus préférentiellement la proportion de noir de carbone varie de 0 à 70 pce (préférentiellement de 0 à 50 pce), en particulier dans le cas de l'utilisation de noirs de carbone de grade ASTM 600 ou 700, et encore plus préférentiellement cette proportion varie de 5 à 50 pce, particulièrement de 5 à 40 pce. De telles quantités représentent un taux volumique variant de 0 à 25% dans la composition, préférentiellement de 1 à 20%.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition, seule ou en coupage avec du noir de carbone, son taux est compris dans un domaine de 0 à 70 pce (préférentiellement de 0 à 50 pce), en particulier également de 5 à 70 pce, et encore plus préférentiellement cette proportion varie de 5 à 50 pce, particulièrement de 5 à 40 pce.

Alternativement, le taux de charge renforçante peut être exprimé en pourcentage volumique par rapport au volume total de charge renforçante et d'élastomère thermoplastique TPEI additionnés. Exprimé de cette façon, le taux de charge renforçante dans les compositions selon l'invention est inférieur ou égal à 90%, préférentiellement inférieur ou égal à 80%, très préférentiellement inférieur ou égal à 75%, de manière encore plus préférentielle, ce taux est inférieur ou égal à 70%, plus préférentiellement inférieur ou égal à 60% et notamment inférieur ou égal à 50%.

### I-1-C. Élastomère thermoplastique à bloc polyisobutylène

Les élastomères thermoplastiques ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique à bloc polyisobutylène (ci-après en abrégé « TPEI ») selon un objet de l'invention comprend, à au moins l'une des extrémités du bloc polyisobutylène, un bloc thermoplastique dont la température de transition vitreuse est supérieure ou égale à 60°C. Idéalement, la température de transition vitreuse est inférieure à 130°C. A titre d'exemple de tels blocs thermoplastiques sur ces élastomères, on peut citer le polystyrène (PS), le polychlorure de vinyle (PVC), le polyméthacrylate de méthyle (PMMA), le polyéthylène (PE), le polypropylène (PP), le polyoxyde d'éthylène (PEO), le poly(acrylonitrile-butabiène-styrène) (ABS), les polymères cellulosiques (nitrocellulose, ethylcellulose, acétate de cellulose ...).

La masse moléculaire moyenne en nombre (notée Mn) de l'élastomère thermoplastique à bloc polyisobutylène est préférentiellement comprise entre 30 000 et 500 000 g/mol, plus préférentiellement comprise entre 40 000 et 400 000 g/mol. En dessous des minima indiqués, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de l'élastomère thermoplastique à bloc polyisobutylène ou TPEI dans une composition pour un bandage pneumatique.

La masse moléculaire moyenne en nombre (Mn) du TPEI est déterminée de manière connue, par chromatographie d'exclusion stérique (SEC). L'échantillon est préalablement solubilisé dans du tétrahydrofurane à une concentration d'environ 1 g/l; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) du TPEI est de préférence inférieur à 3 ; plus préférentiellement Ip est inférieur à 2 et encore plus préférentiellement inférieur à 1,5.

Le bloc polyisobutylène du TPEI est composé majoritairement du monomère isobutylène polymérisé. Par majoritairement, on entend un taux pondéral en monomère par rapport au poids total du bloc « polyisobutylène » le plus élevé, et de préférence un taux pondéral de plus de 50%, plus préférentiellement de plus de 75% et encore plus préférentiellement de plus de 85%. De préférence, le bloc polyisobutylène du copolymère TPEI présente une masse moléculaire moyenne en nombre ("Mn") allant de 25 000 g/mol à 350 000 g/mol, de préférence 35 000 g/mol à 250 000 g/mol de manière à conférer à l'élastomère thermoplastique de bonnes propriétés élastomériques et une tenue mécanique suffisante et compatible avec l'application gomme interne d'un bandage pneumatique.

De préférence, le bloc polyisobutylène du copolymère à blocs présente en outre une température de transition vitreuse ("Tg", mesurée selon ASTM D3418) inférieure ou égale à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du bloc polyisobutylène du copolymère à blocs est plus préférentiellement encore inférieure à - 50°C.

Le bloc polyisobutylène du TPEI peut aussi comprendre avantageusement également un taux d'unités issues d'un ou de plusieurs diènes conjugués insérées dans la chaîne polymérique allant préférentiellement jusqu'à 16% en poids par rapport au poids du bloc polyisobutylène. Au dessus de 16%, on peut observer une baisse de la résistance à la thermooxydation et à l'oxydation à l'ozone de la couche étanche contenant l'élastomère thermoplastique à bloc polyisobutylène utilisée dans un pneumatique.

Les diènes conjugués pouvant être copolymérisés avec l'isobutylène pour constituer le bloc polyisobutylène sont des diènes conjugués en C₄ - C₁₄. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux d'un objet de l'invention, peut être halogéné et comporter des atomes d'halogène dans sa chaîne. Cette halogénation permet d'augmenter la vitesse de cuisson de la composition comprenant l'élastomère thermoplastique à bloc polyisobutylène selon l'invention. Cette halogénation permet d'améliorer la compatibilité de la couche étanche avec les autres éléments adjacents constitutifs d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène.

Selon un premier mode de réalisation, le TPEI est choisi parmi les élastomères thermoplastiques styréniques à bloc polyisobutylène (« TPSI »).

Le bloc thermoplastique est ainsi constitué d'au moins un monomère polymérisé à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

De préférence, l'élastomère thermoplastique TPSI est un copolymère à blocs polystyrène et polyisobutylène.

Préférentiellement, un tel copolymère blocs est un copolymère dibloc styrène/ isobutylène (en abrégé « SIB »).

Préférentiellement également, un tel copolymère blocs est un copolymère tribloc styrène/ isobutylène/ styrène (en abrégé « SIBS »).

Selon un mode de réalisation préférentiel de l'invention, le taux pondéral de styrène (non substitué ou substitué), dans l'élastomère styrénique est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 15 et 35%.

Les élastomères TPSI sont disponibles commercialement, vendus par exemple en ce qui concerne les SIB et SIBS par la société KANEKA sous la dénomination « SIBSTAR » (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPSI, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146). Le document WO 2008/145277 des Demanderesses décrit également une utilisation de tels élastomères TPSI en pneumatique, dans des compositions de couche étanche aux gaz de gonflage.

Selon un second mode de réalisation, les élastomères TPEI peuvent aussi comprendre un bloc thermoplastique ayant une Tg supérieure ou égale à 60°C et constitué à partir de monomères polymérisés autres que des monomères styréniques (en abrégé « TPNSI »). De tels monomères peuvent être choisis parmi les composés suivants et leurs mélanges :
- l'éthylène et le propylène ;
- le chlorure de vinyle ;
- l'oxyde d'éthylène ;
- l'acénaphthyléne : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80 ;
- les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges. On peut citer plus particulièrement, l'acrylate d'adamantyle, le crotonate d'adamantyle, le sorbate d'adamantyle, l'acrylate de 4-biphenylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-dimethyladamantyle, le crotonate de 3,5-dimethyladamantyle, l'acrylate d'isobornyle, l'acrylate de pentachlorobenzyle, l'acrylate de pentaflurobenzyle, l'acrylate de pentachlorophenyle, l'acrylate de pentafluorophenyle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaininoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylényle, le méthacrylate de 2,6-xylényle, l'acrylamide, le N-sec-butylacrylamide, le N-tert-butylacrylamide, le N,N-diisopropylacrylamide, le N-1méthylbutylacrylamide, le N-méthyl-N-phénylacrylamide, le morpholylacrylamide, le piperidylacrylamide, le N-tert-butylméthacrylamide, le 4-butoxycarbonylphenylméthacrylamide, le 4-carboxyphénylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

Selon un autre mode de réalisation, les élastomères TPEI peuvent aussi comprendre un bloc thermoplastique ayant une Tg supérieure ou égale à 60°C et constitué à partir de monomères polymérisés styréniques et non styréniques choisis parmi les monomères listés précédemment. Par exemple, et à titre préférentiel, le bloc thermoplastique peut être constitué d'un copolymère acrylonitrile-butadiène-styrène (ABS).

Selon une variante, le monomère polymérisé autre qu'un monomère styrénique peut être copolymérisé avec au moins un autre monomère de manière à former un bloc thermoplastique ayant une Tg variant de 60°C à 200°C. Selon cet aspect, la fraction molaire en monomère polymérisé autre qu'un monomère styrénique, par rapport au nombre total de motifs du bloc thermoplastique, doit être suffisante pour atteindre une Tg variant préférentiellement de 60°C à 180°C, plus préférentiellement de 80°C à 150°C, encore plus préférentiellement de 100°C à 130°C. De manière préférentielle également, la Tg du bloc thermoplastique peut varier de 80°C à 150°C, ou de manière également préférentielle, de 60°C à 130°C, et plus préférentiellement encore, de 60°C à 110°C. Avantageusement la fraction molaire de cet autre co-monomère peut aller de 0 à 90%, plus préférentiellement de 0 à 75% et encore plus préférentiellement de 0 à 50%.

A titre d'illustration, cet autre monomère susceptible de copolymériser avec le monomère polymérisé autre qu'un monomère styrénique, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Lorsque le co-monomère est un diène conjugué ayant 4 à 14 atomes de carbone, il représente avantageusement une fraction molaire par rapport au nombre total de motifs du bloc thermoplastique allant de 0 à 25%. A titre de diènes conjugués utilisables dans les blocs thermoplastiques selon un objet de l'invention conviennent ceux décrit plus haut, à savoir l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène ou leurs mélanges.

Lorsque le co-monomère est de type vinylaromatique, il représente avantageusement une fraction en motifs sur le nombre total de motifs du bloc thermoplastique de 0 à 90%, préférentiellement allant de 0 à 75% et encore plus préférentiellement allant de 0 à 50%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On peut citer à titre d'exemples illustratifs mais non limitatifs, des mélanges de co-monomères et pouvant être utilisés pour la préparation de blocs thermoplastiques ayant une Tg supérieure ou égale à 100°C, constitués d'indène et de dérivés du styrène, notamment le para-méthylstyrène ou le para-tertiobutyle styrène. L'homme de l'art pourra alors se référer aux documents J.E. Puskas, G. Kaszas, J.P. Kennedy, W.G. Hager, Journal of Polymer Science part A : Polymer Chemistry 1992 30, 41 ou J.P. Kennedy, S. Midha, Y. Tsungae, Macromolecules (1993) 26, 429.

Préférentiellement, un élastomère thermoplastique TPNSI est un copolymère dibloc : bloc thermoplastique / bloc isobutylène. Plus préférentiellement encore, un tel élastomère thermoplastique TPNSI est un copolymère tribloc : bloc thermoplastique / bloc isobutylène / bloc thermoplastique.

L'élastomère TPEI (et préférentiellement l'élastomère TPSI tel que défini ci-dessus), est préférentiellement le seul élastomère thermoplastique constituant de la couche élastomère étanche aux gaz, il est optionnellement étendu avec une huile d'extension telle que par exemple une huile polybutène.

La quantité d'élastomère TPEI (et préférentiellement d'élastomère TPSI tel que défini ci-dessus) varie de 3 à 80 pce, préférentiellement de 5 à 50 pce et notamment de 10 à 40 pce. De telles quantités représentent selon la densité de ce composé, un taux volumique variant de 3 à 60% de la composition de caoutchouc précédemment définie, préférentiellement de 3 à 35% et très préférentiellement de 7 à 30%. Cela permet de diminuer la quantité de charge renforçante (notamment de noir de carbone) de 10 à 100% par rapport aux compositions sans élastomères TPEI ; en effet, le noir est habituellement présent à un taux volumique de 20% dans les compositions classiquement utilisées et il est présent à un taux volumique de 0 à 18% dans les compositions conformes à l'invention.

Alternativement, le taux d'élastomère thermoplastique TPEI peut être exprimé en pourcentage volumique par rapport au volume total de charge renforçante et d'élastomère thermoplastique additionnés. Exprimé de cette façon, le taux de TPEI dans les compositions selon l'invention est supérieur ou égal à 10%, préférentiellement supérieur ou égal à 20%, très préférentiellement supérieur ou égal à 25%, de manière encore plus préférentielle, ce taux est supérieur ou égal à 30%, plus préférentiellement supérieur ou égal à 40% et notamment supérieur ou égal à 50%.

### I-1-D. Huile d'extension

Le caoutchouc butyl et l'élastomère thermoplastique décrits précédemment sont suffisants à eux seuls pour que soient remplies les fonctions d'étanchéité aux gaz vis-à-vis des objets pneumatiques dans lesquels ils sont utilisés.

Toutefois, selon un mode de réalisation préférentiel de l'invention, la composition élastomère précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Si l'on a constaté que l'ajout d'huile se faisait certes au prix d'une certaine perte d'étanchéité, variable selon le type et la quantité d'huile utilisée, cette perte d'étanchéité peut être largement corrigée notamment par ajout d'une charge lamellaire.

On utilise préférentiellement une huile du type polybutène, en particulier une huile polyisobutylène (en abrégé « PIB »), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (e.g. « Dynapak Poly 190 »), par INEOS Oligomer sous la dénomination « Indopol H1200 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination «Telura 618» ou par Repsol sous la dénomination « Extensol 51 ».

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l; puis la solution est filtrée sur filtre de porosité 0,45 µm avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410» et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction de l'élastomère TPEI utilisé (comme indiqué précédemment) ; des conditions particulières d'usage de la couche élastomère étanche aux gaz, et notamment en fonction de l'objet pneumatique dans lequel elle est destinée à être utilisée.

Lorsqu'elle est utilisée, on préfère que le taux d'huile d'extension varie de 2 à 50 pce, plus préférentiellement de 3 à 40 pce. En dessous du minimum indiqué, la présence d'huile d'extension n'est pas sensible. Au-delà du maximum préconisé, on s'expose à un risque de cohésion insuffisante de la composition et de perte d'étanchéité pouvant être néfaste selon l'application considérée.

### I-1-E. Charge lamellaire

L'utilisation optionnelle de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais "platy fillers") sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 1 à 50 pce, soit des taux volumiques variables, notamment de 0,1 à 25% en volume de composition élastomère, et de préférence de 1 à 20% en volume.

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les charges minérales lamellaires à base de silicium et les mélanges de telles charges.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante au sens de la définition précisée dans le paragraphe I-1-B, cependant il peut être considéré comme une charge semi-renforçante dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
(a) tout graphite naturel, associé aux roches affectées par le métamorphisme, après séparation des impuretés accompagnant les veines de graphite et après broyage;
(b) tout graphite naturel expansable thermiquement, i.e. dans lequel est intercalé un ou plusieurs composés chimiques à l'état liquide, par exemple un acide, entre ses plans de graphène;
(c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
(d) tout graphite synthétique obtenu par graphitisation de coke de pétrole.

Les compositions de l'invention peuvent contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non, et sera dans les deux cas assimilé à une charge lamellaire au sens de la présente invention.

On a constaté de façon surprenante que les graphites avec n'importe lequel de ces deux types de morphologie convenaient dans les compositions conformes à l'invention, cependant les graphites présentant une forme lamellaire conviennent préférentiellement, et d'autant plus lorsqu'ils sont orientés de manière a présenter leur plus grande face perpendiculairement au flux de perméation de gaz.

Lorsqu'il est utilisé, le graphite est présent dans la composition à des taux allant de 1 pce à 60 pce, et de préférence entre 5 et 30 pce.

En particulier parmi les charges minérales lamellaires à base de silicium conviennent les phyllosilicates et particulièrement celles comprises dans le groupe constitué par les smectites, le kaolin, le talc, le mica et la vermiculite.

Parmi les phyllosilicates conviennent également pour l'invention, les phyllosilicates fonctionnalisées et en particulier organo-modifiées. Selon un mode de réalisation particulier, la structure organique à laquelle est associée la charge inerte est un surfactant de formule : -M⁺R¹R²R³- ; où M représente un atome d'azote, de soufre, de phosphore ou de pyridine, et où R¹, R², et R³ représente un atome d'hydrogène, un groupe alkyle, un groupe aryle ou un groupe allyle, R¹, R², et R³ étant identiques ou différents.

En particulier, des montmorillonites organo-modifiées conviennent pour l'invention. Ainsi des montmorillonites modifiées avec un surfactant tel qu'un sel d'ammonium quaternaire dioctadecyldiméthyl-dihydrogéné. Une telle montmorillonite organo-modifiée est commercialisée notamment par la Société Southern Clay Products sous la dénomination commerciale : « CLOISITE 6A et 20A ».

D'autres surfactants à base de sels d'ammonium quaternaire peuvent être encore utilisés pour modifier les phyllosilicates tels que décrits dans la demande de brevet WO06/047509.

Comme exemples de micas, on peut citer les micas commercialisés par la société CMMP (Mica-MU®, Mica-Soft®, Briomica® par exemple), ceux commercialisés par la société YAMAGUCHI (A51S, A41S, SYA-21R, SYA-21RS, A21S, SYA-41R), les vermiculites (notamment la vermiculite Shawatec® commercialisée par CMMP ou la vermiculite Microlite® commercialisée par W.R. Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges inertes précitées, autres que le graphite sont en effet particulièrement intéressantes car elles permettent d'améliorer l'imperméabilité des compositions dans lesquelles elles sont dispersées avec un taux adéquat. Par exemple, lorsqu'elles sont utilisées, leur taux peut varier de 1 pce à 80 pce, et de préférence de 3 à 40 pce.

L'introduction des charges lamellaires dans la composition élastomère peut être réalisée selon divers procédés connus, par exemple par mélangeage en solution, par mélangeage en masse dans un mélangeur interne, ou encore par mélangeage par extrusion.

### I-1-F. Système de réticulation

Le système de réticulation peut être un système de vulcanisation, il est préférentiellement à base de soufre (ou donneur de soufre) et d'un accélérateur primaire de vulcanisation. A ce système de vulcanisation viennent optionnellement s'ajouter, divers accélérateurs secondaires ou activateurs de vulcanisation connus (préférentiellement pour 0,5 à 5,0 pce chacun) tels qu'oxyde de zinc, acide stéarique, dérivés guanidiques (en particulier diphénylguanidine), etc. Le soufre ou un donneur de soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une couche étanche de pneumatique. Parmi les donneurs de soufre on peut citer par exemple les alkyl phénol disulfures (APDS) tel que par exemple le disulfure de para-tertiobutylphénol.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-1-G. Additifs divers

La couche ou composition étanche à l'air décrite précédemment peut comporter par ailleurs les divers additifs usuellement présents dans les couches étanches à l'air connues de l'homme du métier. On citera par exemple des charges non renforçantes ou inertes autres que les charges lamellaires précédemment décrites, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (diénique, caoutchouc butyl, TPEI, TPSI, TPNSI,) précédemment décrits, la composition étanche aux gaz pourrait aussi comporter, toujours selon une fraction pondérale minoritaire par rapport à l'élastomère blocs, des polymères autres que des élastomères, tels que par exemple des polymères thermoplastiques.

### I-2. Préparation de la couche étanche de l'invention

Afin de préparer la couche étanche selon l'invention, on procède au mélange du caoutchouc butyl (et éventuels autres élastomères de coupage non thermoplastiques, notamment diéniques) avec les autres composants de la couche étanche soit : l'éventuelle charge renforçante, l'élastomère thermoplastique à blocs polyisobutylène ainsi que le système de réticulation et les éventuels autres ingrédients, tels que l'huile d'extension. Afin d'obtenir une bonne dispersion de l'élastomère thermoplastique au sein de la composition, celui-ci doit être chauffé à une température suffisante (par exemple 60 à 180°C, préférentiellement 80 à 130°C) pendant suffisamment longtemps (par exemple 3 à 20 minutes, préférentiellement 5 à 15 minutes). A la lumière de ce qui suit, l'homme du métier pourra adapter l'ordre d'incorporation des ingrédients (en une fois ou en plusieurs étapes successives), la température et le temps de mélangeage, et, si besoin, le taux d'huile d'extension, en fonction de la température de ramollissement de l'élastomère thermoplastique choisi.

Ainsi, l'invention concerne également un procédé de fabrication d'un objet pneumatique tel que défini précédemment, dans lequel la composition de caoutchouc de la couche élastomère étanche aux gaz de gonflage est fabriquée selon un procédé comportant au moins une étape de mélangeage du caoutchouc butyl avec l'élastomère thermoplastique à blocs polyisobutylène et éventuellement la charge renforçante, à une température variant de 60 à 180°C, (préférentiellement 80 à 130°C) pendant 3 à 20 minutes, (préférentiellement 5 à 15 minutes).

Les préférences décrites pour les compositions selon l'invention, s'appliquent mutatis mutandis au procédé tel que décrit précédemment.

Selon un premier mode de réalisation, on procède pour les essais de la manière suivante : on introduit dans un mélangeur interne, rempli à environ 70% (plus ou moins 5%) et dont la température initiale de cuve est comprise entre 40°C et 80°C, successivement le caoutchouc butyl (et éventuellement des élastomères de coupage non thermoplastiques, notamment diéniques), l'élastomère thermoplastique à bloc polyisobutylène, l'éventuelle charge renforçante, ainsi que les éventuels autres ingrédients à l'exception du système de vulcanisation. On conduit alors un travail thermomécanique (phase non-productive) en une étape, qui dure au total environ 3 à 4 minutes, jusqu'à atteindre une température maximale de « tombée » de 150°C, préférentiellement de 130°C.

On récupère le mélange ainsi obtenu, on le refroidit puis on incorpore du soufre et un accélérateur sur un mélangeur externe (homo-finisseur) à 30°C, en mélangeant le tout (phase productive) pendant un temps approprié (par exemple entre 5 et 12 min).

Si ce premier mode de réalisation est utilisé, on choisira pour une mise en oeuvre facilitée, un élastomère TPEI possédant une température de ramollissement (mesuré selon la norme ISO 4625, méthode "Ring and Ball") inférieure ou égale à 150°C, préférentiellement inférieure à 130°C. Si pour d'autres raisons, le TPEI choisi possède une température de ramollissement supérieure à 130°C ou à 150°C, on pourra alors, incorporer un taux d'huile d'extension au TPEI afin de permettre une bonne mise en oeuvre du mélange à une température inférieure ou égale à 130°C ou à 150°C respectivement. Dans ces cas, on préparera par exemple un masterbatch en mélangeant le TPEI et une huile d'extension (par exemple à l'aide d'une extrudeuse bi-vis), masterbatch que l'on pourra utiliser dans le procédé décrit ci-dessus. Lorsqu'un élastomère TPEI dont le point de ramollissement est inférieur ou égal à 150°C est utilisé, on préfère que le taux d'huile d'extension varie de 2 à 15 pce, notamment de 2 à 10 pce. Lorsqu'un élastomère TPEI dont le point de ramollissement est supérieur à 150°C est utilisé, on préfère que le taux total d'huile d'extension, c'est-à-dire le taux d'huile incorporée au TPEI ajouté au taux d'huile éventuellement incorporée au mélange élastomérique initial varie de 5 à 50 pce, plus préférentiellement de 10 à 40 pce, notamment de 15 et 30 pce.

Selon un autre mode de réalisation, tous les composants y compris le système de vulcanisation peuvent être introduits successivement dans le mélangeur interne tel que décrit ci-dessus. Dans ce cas le mélange doit se faire jusqu'à une température de « tombée » inférieure ou égale à 130°C, préférentiellement inférieure ou égale à 120°C et notamment inférieure ou égale à 110°C.

Si ce deuxième mode de réalisation est utilisé, on choisira pour une mise en oeuvre facilitée, un élastomère TPEI possédant une température de ramollissement (mesuré selon la norme ISO 4625, méthode "Ring and Ball") inférieure ou égale à 130°C, préférentiellement inférieure à 120°C et notamment inférieure à 110°C. Si pour d'autres raisons, le TPEI choisi possède une température de ramollissement supérieure à 130°C, on pourra alors, incorporer un taux d'huile d'extension au TPEI afin de permettre une bonne mise en oeuvre du mélange à une température inférieure ou égale à 130°C, dans ce cas, on préparera par exemple un masterbatch en mélangeant le TPEI et une huile d'extension (par exemple à l'aide d'une extrudeuse bi-vis), masterbatch que l'on pourra utiliser dans le procédé décrit ci-dessus. Lorsqu'un élastomère TPEI dont le point de ramollissement est inférieur ou égal à 130°C est utilisé, on préfère que le taux d'huile d'extension varie de 2 à 15 pce, notamment de 2 à 10 pce. Lorsqu'un élastomère TPEI dont le point de ramollissement est supérieur à 130°C est utilisé, on préfère que le taux total d'huile d'extension, c'est-à-dire le taux d'huile incorporée au TPEI ajouté au taux d'huile éventuellement incorporée au mélange élastomérique initial varie de 5 à 50 pce, plus préférentiellement de 10 à 40 pce, notamment de 15 et 30 pce.

Dans certains modes de réalisation alternatifs, un ou plusieurs des élastomères (butyl, diénique, thermoplastique...) utilisés dans la composition peuvent être introduits sous forme de « masterbatch » ou prémélangés avec certains des composants de la composition.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de gommes intérieures de pneumatique.

### I-3. Utilisation de la couche étanche à fair dans un bandage pneumatique

La couche étanche contenant l'élastomère TPEI précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions enjeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,05 mm, préférentiellement comprise entre 0,1 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

### II. EXEMPLES DE RÉALISATION DE L'INVENTION

La couche étanche aux gaz précédemment décrite est avantageusement utilisable dans les bandages pneumatiques de tous types de véhicules, en particulier véhicules tourisme ou véhicules industriels tels que les poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou "inner liner") couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl et de noir de carbone, le bandage pneumatique conforme à l'invention utilise dans cet exemple, comme couche 10 étanche à l'air, une composition élastomère comportant en outre une élastomère thermoplastique à bloc isobutylène tel que le SIBS "Sibstar 102 T" commercialisé par la société Kaneka.

Le pneumatique pourvu de sa couche étanche à l'air 10 tel que décrit ci-dessus est de préférence réalisé avant vulcanisation (ou cuisson).

La couche étanche à l'air est simplement appliquée de façon conventionnelle à l'endroit souhaité, pour formation de la couche 10. La vulcanisation est ensuite effectuée classiquement. Les élastomères blocs supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

### II-1. Tests

Les propriétés des compositions élastomères étanches aux gaz et de certains de leurs constituants sont caractérisées comme indiqué ci-après.

### II-1-A. Tests d'étanchéité

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. Une valeur arbitraire de 100 est donnée pour la l'étanchéité à l'air du témoin, un résultat supérieur à 100 indiquant une augmentation de l'étanchéité à l'air donc une diminution de la perméabilité.

### II-1-B. Tests de résistance au roulement par mesure du module de perte G"

Des tests de résistance au roulement par mesure du module de perte G" ont été conduits pour évaluer la résistance au roulement apportée par la couche étanche aux gaz de gonflage après cuisson.

L'échantillon se présente sous la forme d'un film de 4mm de largeur et environ 0,5mm d'épaisseur (à 0,1mm près). L'appareillage utilisé est un Analyseur mécanique dynamique (DMA Q800) commercialisé par la société TA Instruments.

Le porte échantillon est constitué de 2 mors venant enserrés les extrémités de l'échantillon. La distance inter mors est de 12 à 13 mm. Le mors supérieur est fixe alors que le mors inférieur est mobile. La pièce mobile permet d'appliquer les efforts définis par l'opérateur sur l'échantillon, à savoir une déformation constante de 7% pour une fréquence de 1Hz. Le tout est placé dans un four permettant de réaliser des rampes de température. La mesure consiste à enregistrer le module de déformation de l'échantillon soumis à cette sollicitation au cours d'une rampe en température de 3°C/min entre 40°C et 100°C. Les résultats présentés ci-dessous sont ceux à 40°C, ils sont présentés en base 100 : une valeur arbitraire de 100 est donnée pour la performance hystérétique du témoin, un résultat supérieur à 100 indiquant une meilleure performance hystérétique donc une diminution du module de perte à 40°C.

### II-1-C. Tests de mesure de perte de pression après 4 semaines

Des tests de mesure ont été conduits pour évaluer la perte de pression de pneumatiques après 4 semaines à 20°C.

Des bandages pneumatiques conformes à l'invention, du type pour véhicule tourisme (dimension 205/55 R16), ont été fabriqués, leur paroi interne étant recouverte par une couche étanche à l'air (10) d'une épaisseur donnée constante (posée sur tambour de confection, avant fabrication du reste du pneumatique). Puis, les pneumatiques ont été vulcanisés. Ces bandages pneumatiques conformes à l'invention ont été comparés à des bandages pneumatiques témoins (marque MICHELIN Energy™ Saver) comportant une couche étanche à l'air conventionnelle, de même épaisseur, à base de caoutchouc butyl. L'étanchéité des deux types de bandages a été mesurée par la mesure de la perte de pression à 20°C après 4 semaines. Les résultats présentés ci-dessous sont présentés en base 100 : une valeur arbitraire de 100 est donnée pour la performance en étanchéité du témoin, un résultat supérieur à 100 indiquant une meilleure performance en étanchéité donc une diminution de la perte de pression après 4 semaines.

### II-1-D. Tests de mesure de résistance au roulement

La résistance au roulement des bandages pneumatiques a été mesurée sur un volant, selon la méthode ISO 87-67 (1992). Les résultats présentés ci-dessous sont présentés en base 100 : une valeur arbitraire de 100 est donnée pour la performance en résistance au roulement du témoin, un résultat supérieur à 100 indiquant une meilleure performance en résistance au roulement donc une diminution de la résistance au roulement.

### II-2. Essais

Une composition conventionnelle, étanche aux gaz contenant des élastomères butyl, une charge renforçante (noir de carbone N772) et des additifs usuels a été préparée comme témoin (A-1 et B-1).

### II-2-A. EXEMPLE A

Dans un premier exemple, les compositions préparées comportent un taux volumique constant de charge et élastomère thermoplastique additionnés. Les compositions A-2 et A-3, conformes à l'invention, comportent un mélange de charge renforçante de type noir de carbone et d'élastomère thermoplastique de type SIBS dans des proportions variables, présentées dans le tableau 1 ci-dessous.

Des tests d'étanchéité, et de mesure du module de perte tels que précédemment décrits ont été effectués sur ces compositions. Le tableau 1 présente l'ensemble des compositions ainsi que les résultats d'étanchéité et de module de perte. La composition A-1 est prise comme référence.

Les résultats présentés au tableau 1 montrent un gain significatif de la performance en hystérèse mesurée par module de perte à 40°C d'autant plus grand que la substitution du noir de carbone par le SIBS est importante (compositions A2 et A3). En terme de performance de perméabilité (étanchéité relative), les compositions A2 et A3 ne dégradent pas, et même améliorent légèrement la performance, par rapport à la composition témoin.

**Tableau 1**

| *Composition N°:* | *A-1* | *A-2* | *A-3* |
|---|---|---|---|
| *Butyl 1 (1) (pce)* | *67* | *67* | *67* |
| *Butyl 2 (2) (pce)* | *33* | *33* | *33* |
| *N772 (3) (pce)* | *62* | *46,5* | *31* |
| *N772 (3) (%)** | *100* | *75* | *50* |
| *SIBS (4) (pce)* | *0* | *7,6* | *15,3* |
| *SIBS (4) (%)** | *0* | *25* | *50* |
| *Huile d'extension (5) (pce)* | *6* | *6* | *6* |
| *Acide stéarique* | *0,8* | *0,8* | *0,8* |
| *ZnO* | *1* | *1* | *1* |
| *APDS (6)* | *0,8* | *0,8* | *0,8* |
| *MB TS (7)* | *1* | *1* | *1* |
| *Etanchéité relative (base 100)* | *100* | *104* | *107* |
| *Performance hystérétique : Module de perte à 40°C (base 100)* | *100* | *161* | *225* |

| | | | |
|---|---|---|---|
| (1) BIIR copolymère bromoisobutylène-isoprène (2) IIR copolymère isobutene-isoprène (3) N772 noir de carbone (4) SIBS « Sibstar 102 T» commercialisé par la société Kaneka (5) « Vivatec » 500 TDAE (6) APDS : « Vultac TB7 » commercialisé par la société Arkema (7) MBTS : « Rubator MBTS » commercialisé par la société G-QUIMICA * Alternativement, ces taux de charge et d'élastomère thermoplastique sont exprimés en pourcentage volumique par rapport au volume total des charges et élastomères thermoplastiques additionnés. | | | |

### II-2-B. EXEMPLE B

Dans un second exemple, les performances d'une couche d'étanchéité conforme à l'invention ont été évaluées en pneu (205/55 R16). A cette fin, un pneumatique B3 muni de la composition A3 conforme à l'invention a été comparée à un premier témoin B0 exempt de couche d'étanchéité et d'un second témoin B1 muni de la composition A1. Ces pneumatiques ont été évalués en test d'étanchéité (mesure de perte pression après 4 semaines) et de résistance au roulement

**Tableau 2**

| *Pneumatique N°:* | *B-0* | *B-1* | *B-3* |
|---|---|---|---|
| *Formulation de la couche d'étanchéité* | / | *A-1* | *A-3* |
| *Performance en peste de pression (base 100)* | *28* | *100* | *88* |
| *Performance en résistance au roulement, (base 100)* | *103* | *100* | *102* |

Les résultats présentés au tableau 2 mettent en évidence que le pneumatique B-3 réalisé avec la composition selon l'invention présente une performance en perte de pression légèrement inférieure, mais néanmoins acceptable pour l'homme de l'art, par rapport à la performance en perte de pression du pneumatique B-1, alors que le témoin B-0 (exempt de couche d'étanchéité) entraîne une dégradation en étanchéité bien trop importante.

Concernant la performance en résistance au roulement, notons d'abord la perte de 3 points de performance du pneumatique B-1, par rapport au pneumatique B-0 sans couche d'étanchéité. Cette perte de performance est liée à la présence d'une couche étanche conventionnelle. De manière inattendue, le pneumatique B-3 selon l'invention, ne perd quant à lui qu'un point de performance par rapport au pneumatique sans couche d'étanchéité. Cela signifie que la perte de performance due à la couche d'étanchéité est diminuée de deux tiers dans le pneumatique selon l'invention. Cette amélioration est très sensible pour l'homme de l'art.

Ainsi, et de manière inattendue, l'invention apporte une solution aux manufacturiers permettant d'obtenir des compositions pour couche étanche au gaz de gonflage qui présentent une étanchéité satisfaisante tout en diminuant la résistance au roulement, par rapport aux couches internes utilisées industriellement, et sans nécessiter de changements majeurs dans les outils actuellement utilisés industriellement pour confectionner les couches d'étanchéité.

## Revendications

1. Objet pneumatique (1) pourvu d'une couche élastomère (10) étanche aux gaz de gonflage, ladite couche élastomère comprenant au moins une composition de caoutchouc comportant au moins, à titre d'élastomère non thermoplastique, un caoutchouc butyl, utilisé seul, ou en coupage avec un ou plusieurs autres élastomères non thermoplastiques, un système de réticulation, optionnellement une charge renforçante à un taux compris dans un domaine de 0 à 120 pce et un élastomère thermoplastique à bloc polyisobutylène, **caractérisé en ce que** le taux d'élastomère thermoplastique est compris dans un domaine de 3 à 80 pce, parties en poids pour cent parties d'élastomère non thermoplastique.

2. Objet pneumatique selon la revendication 1, dans lequel le taux d'élastomère thermoplastique à bloc polyisobutylène est compris dans un domaine de 5 à 50 pce.

3. Objet pneumatique selon l'une des revendications 1 ou 2, dans lequel la composition de caoutchouc comporte un taux d'élastomère thermoplastique à bloc polyisobutylène supérieur ou égal à 10% en pourcentage volumique par rapport au volume total de charge renforçante et d'élastomère thermoplastique additionnés.

4. Objet pneumatique selon la revendication 3 dans lequel le taux d'élastomère thermoplastique à bloc polyisobutylène est supérieur ou égal à 20% en pourcentage volumique par rapport au volume total de charge renforçante et d'élastomère thermoplastique additionnés.

5. Objet pneumatique selon l'une quelconque des revendications 1 à 4 dans lequel l'élastomère thermoplastique à bloc polyisobutylène comprend, à au moins l'une des extrémités du bloc polyisobutylène, un bloc thermoplastique dont la température de transition vitreuse est supérieure ou égale à 60 °C.

6. Objet pneumatique selon la revendication 5, dans lequel le bloc thermoplastique de l'élastomère thermoplastique à bloc polyisobutylène est constitué d'au moins un monomère polymérisé choisi dans le groupe constitué par styrène, méthylstyrènes, para-tertio-butylstyrène, chlorostyrènes, bromostyrènes, fluorostyrènes, para-hydroxy-styrène, et les mélanges de ces monomères.

7. Objet pneumatique selon la revendication 6, dans lequel l'élastomère thermoplastique à bloc polyisobutylène est choisi dans le groupe constitué par les copolymères dibloc styrène/ isobutylène (« SIB »), les copolymères tribloc styrène/ isobutylène/ styrène (« SIBS »), et les mélanges de ces copolymères .

8. Objet pneumatique selon la revendication 7, dans lequel l'élastomère thermoplastique à bloc polyisobutylène est un copolymère tribloc styrène/ isobutylène/ styrène (« SIBS »).

9. Objet pneumatique selon la revendication 5, dans lequel le bloc thermoplastique de l'élastomère thermoplastique à bloc polyisobutylène est constitué d'au moins un monomère polymérisé choisi dans le groupe constitué par l'éthylène, le propylène, l'oxyde d'éthylène, le chlorure de vinyle, l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile, le methacrylate de méthyle, les dérivés cellulosiques et les mélanges de ces composés.

10. Objet pneumatique selon l'une quelconque des revendications 1 à 9, dans lequel le caoutchouc butyl est un copolymère d'isobutylène et d'isoprène.

11. Objet pneumatique selon l'une quelconque des revendications 1 à 9, dans lequel le caoutchouc butyl est un copolymère bromo-isobutylène-isoprène.

12. Objet pneumatique selon l'une quelconque des revendications 1 à 9, dans lequel le caoutchouc butyl est un copolymère chloro-isobutylène-isoprène.

13. Objet pneumatique selon l'une quelconque des revendications 1 à 12, dans lequel la composition de caoutchouc comporte en plus une huile d'extension à un taux compris entre 2 pce et 50 pce.

14. Objet pneumatique selon l'une quelconque des revendications 1 à 13, dans lequel la charge renforçante est un noir de carbone.

15. Objet pneumatique selon l'une quelconque des revendications 1 à 14 dans lequel ledit objet est un bandage pneumatique.

## Patentansprüche

1. Pneumatischer Gegenstand (1), welcher mit einer für Aufpumpgase undurchlässigen Elastomerschicht (10) versehen ist, wobei diese Elastomerschicht wenigstens eine Kautschukzusammensetzung umfasst, welche wenigstens, als nicht thermoplastisches Elastomer, einen Butylkautschuk, der allein oder im Verschnitt mit einem oder mehreren anderen nicht thermoplastischen Elastomeren verwendet wird, ein Vernetzungssystem, optional einen verstärkenden Füllstoff mit einem Anteil, der im Bereich von 0 bis 120 pce liegt, und ein thermoplastisches Elastomer mit Polyisobutylenblock aufweist, **dadurch gekennzeichnet, dass** der Anteil an thermoplastischem Elastomer im Bereich von 3 bis 80 pce (Gewichtsteile pro hundert Teile nicht thermoplastisches Elastomer) liegt.

2. Pneumatischer Gegenstand nach Anspruch 1, wobei der Anteil an thermoplastischem Elastomer mit Polyisobutylenblock im Bereich von 5 bis 50 pce liegt.

3. Pneumatischer Gegenstand nach Anspruch 1 oder 2, wobei die Kautschukzusammensetzung einen Anteil an thermoplastischem Elastomer mit Polyisobutylenblock aufweist, der größer oder gleich 10 Volumenprozent ist, bezogen auf das Gesamtvolumen von verstärkendem Füllstoff und von thermoplastischem Elastomer zusammen.

4. Pneumatischer Gegenstand nach Anspruch 3, wobei der Anteil an thermoplastischem Elastomer mit Polyisobutylenblock größer oder gleich 20 Volumenprozent ist, bezogen auf das Gesamtvolumen von verstärkendem Füllstoff und von thermoplastischem Elastomer zusammen.

5. Pneumatischer Gegenstand nach einem der Ansprüche 1 bis 4, wobei das thermoplastische Elastomer mit Polyisobutylenblock an mindestens einem der Enden des Polyisobutylenblocks einen thermoplastischen Block aufweist, dessen Glasübergangstemperatur größer oder gleich 60 °C ist.

6. Pneumatischer Gegenstand nach Anspruch 5, wobei der thermoplastische Block des thermoplastischen Elastomers mit Polyisobutylenblock aus mindestens einem polymerisierten Monomer besteht, das aus der Gruppe ausgewählt ist, welche aus Styrol, Methylstyrolen, para-tert-Butylstyrol, Chlorstyrolen, Bromstyrolen, Fluorstyrolen, para-Hydroxystyrol und den Mischungen dieser Monomere besteht.

7. Pneumatischer Gegenstand nach Anspruch 6, wobei das thermoplastische Elastomer mit Polyisobutylenblock aus der Gruppe ausgewählt ist, welche aus den Diblockcopolymeren Styrol/Isobutylen ("SIB"), den Triblockcopolymeren Styrol/Isobutylen/Styrol ("SIBS") und den Mischungen dieser Copolymere besteht.

8. Pneumatischer Gegenstand nach Anspruch 7, wobei das thermoplastische Elastomer mit Polyisobutylenblock ein Triblockcopolymer Styrol/Isobutylen/Styrol ("SIBS") ist.

9. Pneumatischer Gegenstand nach Anspruch 5, wobei der thermoplastische Block des thermoplastischen Elastomers mit Polyisobutylenblock aus mindestens einem polymerisierten Monomer besteht, das aus der Gruppe ausgewählt ist, welche aus Ethylen, Propylen, Ethylenoxid, Vinylchlorid, Acenaphthylen, Inden, 2-Methylinden, 3-Methylinden, 4-Methylinden, Dimethylinden, 2-Phenylinden, 3-Phenylinden, 4-Phenylinden, Isopren, den Acrylsäureestern, Crotonsäure, Sorbinsäure, Methacrylsäure, den Derivaten von Acrylamid, den Derivaten von Methacrylamid, den Derivaten von Acrylnitril, den Derivaten von Methacrylnitril, Methylmethacrylat, den Cellulosederivaten und den Mischungen dieser Verbindungen besteht.

10. Pneumatischer Gegenstand nach einem der Ansprüche 1 bis 9, wobei der Butylkautschuk ein Copolymer von Isobutylen und Isopren ist.

11. Pneumatischer Gegenstand nach einem der Ansprüche 1 bis 9, wobei der Butylkautschuk ein Brom-Isobutylen-Isopren-Copolymer ist.

12. Pneumatischer Gegenstand nach einem der Ansprüche 1 bis 9, wobei der Butylkautschuk ein Chlor-Isobutylen-Isopren-Copolymer ist.

13. Pneumatischer Gegenstand nach einem der Ansprüche 1 bis 12, wobei die Kautschukzusammensetzung außerdem ein Verlängerungsöl mit einem Anteil, der zwischen 2 und 50 pce liegt, aufweist.

14. Pneumatischer Gegenstand nach einem der Ansprüche 1 bis 13, wobei der verstärkende Füllstoff ein Ruß ist.

15. Pneumatischer Gegenstand nach einem der Ansprüche 1 bis 14, wobei der Gegenstand ein Luftreifen ist.

## Claims

1. Inflatable article (1) provided with an elastomer layer (10) airtight towards inflation gases, the said elastomer layer comprising at least one rubber composition comprising at least, as non-thermoplastic elastomer, a butyl rubber, used alone or as a blend with one or more other non-thermoplastic elastomers, a crosslinking system, optionally a reinforcing filler at a content within a range from 0 to 120 phr and a thermoplastic elastomer comprising a polyisobutylene block, **characterized in that** the content of thermoplastic elastomer is within a range from 3 to 80 phr, parts by weight per 100 parts of non-thermoplastic elastomer.

2. Inflatable article according to Claim 1, in which the content of thermoplastic elastomer comprising a polyisobutylene block is within a range from 5 to 50 phr.

3. Inflatable article according to either of Claims 1 and 2, in which the rubber composition comprises a content of thermoplastic elastomer comprising a polyisobutylene block of greater than or equal to 10% as percentage by volume, with respect to the total volume of added reinforcing filler and added thermoplastic elastomer.

4. Inflatable article according to Claim 3, in which the content of thermoplastic elastomer comprising a polyisobutylene block is greater than or equal to 20% as percentage by volume, with respect to the total volume of added reinforcing filler and added thermoplastic elastomer.

5. Inflatable article according to any one of Claims 1 to 4, in which the thermoplastic elastomer comprising a polyisobutylene block comprises, at at least one of the ends of the polyisobutylene block, a thermoplastic block having a glass transition temperature of greater than or equal to 60°C.

6. Inflatable article according to Claim 5, in which the thermoplastic block of the thermoplastic elastomer comprising a polyisobutylene block is composed of at least one polymerized monomer chosen from the group consisting of styrene, methylstyrenes, para-(tert-butyl)styrene, chlorostyrenes, bromostyrenes, fluorostyrenes, para-hydroxystyrene and the mixtures of these monomers.

7. Inflatable article according to Claim 6, in which the thermoplastic elastomer comprising a polyisobutylene block is chosen from the group consisting of styrene/isobutylene diblock copolymers ("SIB"), styrene/isobutylene/styrene triblock copolymers ("SIBS") and the mixtures of these copolymers.

8. Inflatable article according to Claim 7, in which the thermoplastic elastomer comprising a polyisobutylene block is a styrene/isobutylene/styrene triblock copolymer ("SIBS").

9. Inflatable article according to Claim 5, in which the thermoplastic block of the thermoplastic elastomer comprising a polyisobutylene block is composed of at least one polymerized monomer chosen from the group consisting of ethylene, propylene, ethylene oxide, vinyl chloride, acenaphthylene, indene, 2-methylindene, 3-methylindene, 4-methylindene, dimethylindenes, 2-phenylindene, 3-phenylindene, 4-phenylindene, isoprene, esters of acrylic acid, crotonic acid, sorbic acid and methacrylic acid, derivatives of acrylamide, derivatives of methacrylamide, derivatives of acrylonitrile, derivatives of methacrylonitrile, methyl methacrylate, cellulose derivatives and the mixtures of these compounds.

10. Inflatable article according to any one of Claims 1 to 9, in which the butyl rubber is a copolymer of isobutylene and isoprene.

11. Inflatable article according to any one of Claims 1 to 9, in which the butyl rubber is a bromoisobutylene/isoprene copolymer.

12. Inflatable article according to any one of Claims 1 to 9, in which the butyl rubber is a chloroisobutylene/isoprene copolymer.

13. Inflatable article according to any one of Claims 1 to 12, in which the rubber composition additionally comprises an extending oil at a content of between 2 phr and 50 phr.

14. Inflatable article according to any one of Claims 1 to 13, in which the reinforcing filler is a carbon black.

15. Inflatable article according to any one of Claims 1 to 14, in which the said article is a tyre.
